**Europäisches Patentamt**

**European Patent Office**

**Office européen des brevets**

(19)

(11) Veröffentlichungsnummer: **0 109 494
B1**

# EUROPÄISCHE PATENTSCHRIFT

(12)

(45) Veröffentlichungstag der Patentschrift:
30.04.86

(51) Int. Cl.⁴: **B 23 D 33/00**

(21) Anmeldenummer: **83108756.4**

(22) Anmeldetag: **06.09.83**

(54) Vorrichtung zum Trennen erwärmter Stangen mittels einer Warmschere.

(30) Priorität: **29.09.82 DE 3236025**

(43) Veröffentlichungstag der Anmeldung:
**30.05.84 Patentblatt 84/22**

(45) Bekanntmachung des Hinweises auf die Patenterteilung:
**30.04.86 Patentblatt 86/18**

(84) Benannte Vertragsstaaten:
**BE CH FR GB IT LI**

(56) Entgegenhaltungen:
**DE - A - 2 309 427
GB - A - 985 225
GB - A - 1 037 559
US - A - 2 507 448**

(73) Patentinhaber: **BROWN, BOVERI & CIE
Aktiengesellschaft, Kallstadter Strasse 1,
D-6800 Mannheim 31 (DE)**

(72) Erfinder: **Mertens, Manfred, Ing. grad., Rilkeweg 7,
D-4714 Selm (DE)**
Erfinder: **Bauszus, Rüdiger, Ahornstrasse 23,
D-4670 Lünen (DE)**

(74) Vertreter: **Kempe, Wolfgang, Dr. et al, c/o Brown, Boveri
& Cie AG Postfach 351, D-6800 Mannheim 1 (DE)**

## Beschreibung

Die Erfindung bezieht sich auf eine Vorrichtung zum Trennen erwärmter Stangen mittels einer Warmschere in Stangenabschnitte mit Abschnittslängen hoher Genauigkeit.

Derartige Vorrichtungen sind erforderlich beispielsweise bei Gesenkschmieden, denen das zu schmiedende Material in Form von Stangen zugeführt wird. Es ist ohne weiteres verständlich, daß hierbei hohe Anforderungen an die Einhaltung der Länge der einzelnen Stangenabschnitte gestellt werden müssen. Es sind zwei Verfahren bekannt geworden, um ziemlich genaue Abschnittslängen warm zu trennen. Bei der einen Anlage wird die erwärmte Stange gegen einen verstellbaren Festanschlag gefahren. Durch das Aufprallen der erwärmten Stangen kann es zu Verschweißungen an den Stoßstellen der im Erwärmer noch befindlichen Stangen kommen. Bei dem anderen Verfahren wird die Stange vor der Schere mittels einer einstellbaren Vorschubeinrichtung positioniert. Hierbei hängt die zu erreichende Schergenauigkeit von der Positioniergenauigkeit der Vorschubeinrichtung vor der Schere ab. Um dies zu erreichen, müssen hohe Klemmkräfte und eine aufwendige Mechanik im direkten Kontakt mit dem heißen Material in Kauf genommen werden.

Aufgabe der Erfindung ist es, eine Vorrichtung zum Abschneiden erwärmter Stangen in Längen hoher Genauigkeit ohne eine aufwendige Mechanik und hohe Klemmkräfte zu schaffen. Verschweißungen durch Stöße oder dergleichen sollen ebenfalls vermieden werden.

Gemäß der Erfindung wird die gestellte Aufgabe dadurch gelöst, daß ein mit geringer Kraft an dem Stangenende angedrückter Meßstab mit der Stange verschoben wird und hierbei erzeugte Signale proportional zu dem Verschiebeweg der Stange und des Meßstabes über eine Steuereinrichtung auf den Antrieb der Stangen und die Warmschere derart einwirken, daß bei Erreichen der gewünschten Länge der Antrieb stillgesetzt und durch Betätigen der Warmschere der Stangenabschnitt abgeschnitten wird.

Der Meßstab kann mittels einer Federkraft gegen das Stangenende gedrückt werden. Es ist zweckmäßig, den Meßstab als optoelektronisches Meßlineal auszubilden. Der dem Stangenende zugewandte Abtastkopf des Meßstabes kann vorteilhaft als pneumatisch gedämpfter Tastkopf ausgebildet sein. Der Meßstab kann auch aus einer Kugelvollspindel mit einer Mutter als Drehgeber bestehen.

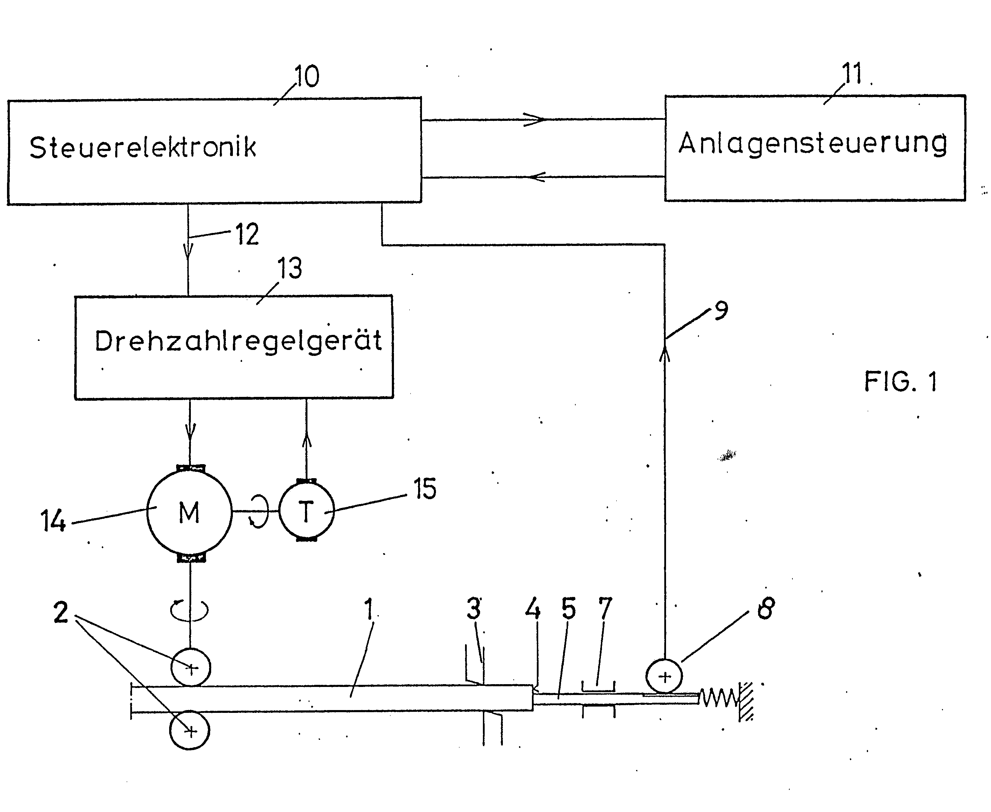

Ein schematisches Ausführungsbeispiel ist in der Figur dargestellt.

Die erwärmte Stange 1 wird mittels der Antriebsrollen 2 der Warmschere 3 zugeführt. Die Erwärmung, im allgemeinen eine induktive Erwärmung, ist in dieser Figur nicht dargestellt. Gegen das Ende 4 der Stange 1 wird ein Meßstab, beispielsweise mittels einer Feder 6, leicht angedrückt. Der Meßstab 5 ist in der Führung 7 gelagert. Mittels des Meßwertaufnehmers 8 wird die Längsbewegung des Meßstabes 5 und damit der Stange 1 erfaßt. Entsprechende Signale 9 werden kontinuierlich der Steuerelektronik 10 weiterleitet. In Abhängigkeit von den Meßimpulsen und den Programmwerten in der Anlagensteuerung 11 werden Steuersignale über die Leitung 12 dem Drehzahlregelgerät 13 weitergeleitet. Dieses Drehzahlregelgerät 13 beeinflußt den Antriebsmotor 14, der mit dem Tachogenerator 15 verbunden ist. Der Tachogenerator 15 meldet die jeweils erreichte Drehzahl an das Drehzahlregelgerät 13 weiter. Der Antriebsmotor 14, z.B. ein Scheibenläufermotor, wirkt unmittelbar auf die Antriebsrollen 2 ein.

Der Antriebsmotor 14 mit den Antriebsrollen 2 für die Stange 1 kann zwischen der Schere und den Induktionsspulen zur Erwärmung der Stange oder bei einem kombinierten Stangenbockerwärmer vor den Induktionsspulen angeordnet sein. Der Meßstab 5 ist zweckmäßig wassergekühlt, um eine unzulässige Erwärmung und die hiermit verbundene Wärmeausdehnung zu vermeiden. Wird als Meßstab eine Kugelvollspindel verwendet, so wird diese von der Stange bewegt und die dabei entstehende Rotation der Mutter betätigt einen Drehgeber, dessen Signale der Steuerelektronik 10 zugeführt werden.

Wie sich aus der vorstehenden Beschreibung ergibt, wird der Weg des heißen Stangenendes direkt mit hoher Genauigkeit erfaßt und mittels einer übergeordneten Steuerelektronik wird der Antrieb entsprechend geregelt. Hierdurch ist es möglich, den vorgegebenen Sollwert derart genau einzustellen, daß, wenn 100 mm 10000 Inkrementen entspricht, der Sollwert auf 1 Inkrement genau erreicht wird. Durch die erfindungsgemäße Anordnung werden alle das Meßergebnis verfälschende Einflüsse, wie z.B. Schlupf des Antriebes, Verschweißen der Stangenenden, Materialtoleranzen oder dergleichen ausgeschaltet.

## Patentansprüche

1. Vorrichtung zum Trennen erwärmter Stangen mittels einer Warmschere in Stangenabschnitte mit Abschnittslängen hoher Genauigkeit, dadurch gekennzeichnet, daß ein mit geringer Kraft an das Stangenende (4) angedrückter Meßstab (5) mit der Stange (1) verschoben wird und hierbei erzeugte Signale (8,9) proportional zu dem Verschiebeweg der Stange und des Meßstabes über eine Steuereinrichtung (10) auf den Antrieb (14) der Stangen und die Warmschere (3) derart einwirken, daß bei Erreichen der gewünschten Länge der Antrieb stillgesetzt und durch Betätigen der Warmschere der Stangenabschnitt abgetrennt wird.

2. Vorrichtung nach Anspruch 1, dadurch gekennzeichnet, daß der Meßstab (5) mittels Federkraft (6) gegen das Stangenende (4) gedrückt wird.

3. Vorrichtung nach einem der Ansprüche 1 oder 2, dadurch gekennzeichnet, daß der Meßstab (5) als optoelektronisches Meßlineal ausgebildet ist.

4. Vorrichtung nach einem der Ansprüche 1 bis 3, dadurch gekennzeichnet, daß der dem Stangenende (4) zugewandte Abtastkopf des Meßstabes (5) als pneumatisch gedämpfter Tastkopf ausgebildet ist.

5. Vorrichtung nach einem der Ansprüche 1 bis 4, dadurch gekennzeichnet, daß der Meßstab (5) aus einer Kugelvollspindel mit einer Mutter als Drehgeber besteht.

## Claims

1. Device for separating heated rods by means of a pair of hot shears into rod sections with sectional lengths of high accuracy, characterised in that a measuring bar (5) pressed with slight force against the rod end (4) is displaced with the rod (1) and signals (8,9) generated hereby, proportional to the displacement travel of the rod and of the measuring bar, act via a control facility (10) on the drive (14) of the rods and on the hot shears (3) such that when the required length is reached the drive is shut down and, by actuation of the hot shears, the rod section is severed.

2. Device according to Claim 1, characterised in that the measuring bar (5) is pushed against the rod end (4) by means of spring force (6).

3. Device according to one of Claims 1 or 2, characterised in that the measuring bar (5) is designed as an optoelectronic measuring rule.

4. Device according to one of Claims 1 to 3, characterised in that the sensing head of the measuring bar (5) facing the rod end (4) is designed as a pneumatically damped probe.

5. Device according to one of Claims 1 to 4, characterised in that the measuring bar (5) consists of a ball solid spindle with a nut as rotary sensor.

## Revendications

1. Dispositif pour sectionner à l'aide d'une cisaille à chaud des barres réchauffées en tronçons de barres de longueurs très précises, caractérisé par le fait qu'une échelle de mesure (5) appuyée avec une légère force sur l'extrémité (4) de la barre est déplacée avec la barre (1), et que des signaux (8, 9) produits proportionnellement au parcours de déplacement de la barre et de l'échelle de mesure agissent par l'intermédiaire d'un dispositif de commande (10) sur l'unité d'entrainement (14) des barres et sur la cisaille à chaud (3) de sorte telle que lors de l'atteinte de la longueur souhaitée, l'unité d'entrainement est arrêtée et le tronçon de barre est sectionné par actionnement de la cisaille à chaud.

2. Dispositif selon la revendication 1, caractérisé par le fait que l'échelle de mesure (5) est appuyée sur l'extrémité (4) de la barre par force de ressort (6).

3. Dispositif selon la revendication 1 ou 2, caractérisé par le fait que l'échelle de mesure (5) est realisée sous forme de règle de mesure optoélectronique.

4. Dispositif selon une des revendications 1 à 3, caractérisé par le fait que la tête de détection de l'échelle de mesure (5) tournée vers l'extrémité (4) de la barre est realisée sous forme de tête de détection à amortissement pneumatique.

5. Dispositif selon une des revendications 1 à 4, caractérisé par le fait que l'échelle de mesure (5) est constituée par une tige filetée pleine à billes avec un écrou comme indicateur de rotation.

Anlagensteuerung

Steuerelektronik

Drehzahlregelgerät

M  T

FIG. 1